# EUROPEAN PATENT APPLICATION

(11) **EP 0 631 948 A1**
(43) Date of publication of application: **04.01.1995**
(21) Application number: 94304550.0
(22) Date of filing: 22.06.1994
(51) Int. Cl.: B65D 81/00, A47J 31/04, A47J 31/06

(54) **Filterbag for espresso coffeemakers**

(30) Priority: 30.06.1993 US 85755
(71) Applicant: JACOBS SUCHARD AG, CH-8034 Zürich (CH)
(72) Inventor: Heilmann, Wolfgang, (NMN), D-28355 Bremen (DE); Kurtzahn, Frithjof Hans, D-28844 Weyhe (DE); Ehlers, Hinrich, (NMN), D-28357 Bremen (DE)
(74) Representative: Eyles, Christopher Thomas

(57) **Abstract**

A filterbag (26) for espresso coffeemakers (70) having loose ground espresso coffee (18) therein which is inserted into a funnel basket or sieve inset (74) of an espresso coffeemaker (70). After usage, the filterbag, with the used coffee grounds intact therein, is disposed of as a single unit without the mess or bother of loose coffee grounds. The filterbag includes a first piece of filterpaper (16) having an outer circular diameter, and being formed into a central, substantially cylindrical pocket having an outer circular diameter and a depth. A second substantially planar circular piece of filterpaper (20), having an outer diameter substantially equal to that of the first piece of filterpaper, is sealed to the first piece of filterpaper at an annular flange around the central substantially cylindrical pocket. A metered quantity of loose ground espresso coffee is sealed within the central substantially cylindrical pocket. In usage, the central substantially cylindrical pocket of the filterbag is placed in a funnel basket of an espresso coffeemaker which is then positioned in a base pot (72) of the espresso coffeemaker, and the annular sealed flange is placed and secured in place in an annular area between the funnel basket in the base pot and a top pot (78) of the espresso coffeemaker.

## Description

### BACKGROUND OF THE INVENTION

### 1. Field of the Invention

The present invention relates generally to a filterbag for espresso coffeemakers, and more particularly pertains to a universal coffee filterbag for espresso coffeemakers which is designed to be commercially produced at a relatively high manufacturing production rate, and is capable of universally fitting and providing quality espresso coffee brewing in a variety of typical prior art espresso coffeemakers.

### 2. Discussion of the Prior Art

Italian, espresso and cappuccino coffeemakers are well known in the art, and are used to brew espresso or cappuccino coffee. These coffeemakers generally include a base pot in which a measured amount of water is initially placed. A funnel basket or sieve inset having a measured amound of ground espresso coffee therein is inserted into the base pot. The funnel basket inset includes a bottom percolator stem extending downwardly approximately to the bottom of the base pot. A top pot of the espresso coffeemaker is then screwed onto the base pot. The top pot includes a liquid spout therein which extends approximately to the top of the top pot. In usage, the assembled espresso coffeemaker is heated, as on a range, until the water in the base pot boils. The boiling water then percolates up through the percolator stem, and passes through the ground espresso coffee in the funnel basket inset, and then upwardly through the liquid spout, out the top thereof, and into the top pot, in which the brewed espresso coffee accumulates. After brewing and serving the brewed espresso coffee, the top pot is unscrewed from the base pot. The used espresso coffee grounds are then removed from the funnel basket inset, and are thrown away or disposed of.

Such espresso or Italian coffeemakers are currently frequently used by consumers by placing a manually measured quantity of ground espresso coffee into the funnel basket or sieve inset. After brewing, the used coffee grounds are disposed of, frequently creating a mess with the loose coffee grounds during disposal. Moreover, this prior art approach frequently creates problems with improper and imprecise measurements of the quantity of ground espresso coffee placed into the funnel basket, which results in too weak or too strong brewed espresso coffee.

In contrast thereto, the filterbag for espresso coffeemakers provided by the present invention provides several advantages, particularly for espresso-type coffees which are extracted under pressure, namely, improved hygiene, optimal storage of the coffee, ease of use, better control over the metered quantity of ground espresso coffee placed in the coffeemaker, better control of the quality of the coffee obtained, and good reproducibility of the extraction conditions.

Demande de Brevet European 0 468 079 A1 (an English language version of which is available in published Canadian Patent Application 2 046 558) discloses a sealed cartridge for an espresso coffeemaker which includes a cup with a frustroconical lateral wall having an upper face and a smaller diameter lower face, with a filter being placed below and spaced from the lower face. The sealed cartridge is preferably fabricated from aluminum or plastic, which can be relatively expensive compared to the simple design of a paper filterbag for espresso coffeemakers pursuant to the present invention. Moreover, the aluminum or plastic construction of this prior art sealed cartridge can present problems with disposal or recycling of this prior art design.

### SUMMARY OF THE INVENTION

Accordingly, it is a primary object of the present invention to provide a filterbag for espresso coffeemakers. A filterbag for espresso coffeemakers pursuant to the present invention provides advantages of improved hygiene, optimal storage of the coffee, ease of use, better control over the metered quantity of ground espresso coffee placed in the coffeemaker, better control of the quality of the coffee obtained, and good reproducibility of the extraction conditions.

A further object of the subject invention is the provision of a universal coffee filterbag for espresso coffeemakers which is designed to be commercially produced at a relatively high manufacturing production rate, and is capable of universally fitting and providing quality espresso coffee brewing in a variety of typical prior art espresso coffeemakers.

In accordance with the teachings herein, the present invention provides a filterbag for espresso coffeemakers having loose ground espresso coffee therein which is inserted into a funnel basket or sieve inset of an espresso coffeemaker, and after usage, the filterbag, with the used coffee grounds intact therein, is disposed of as a single unit without the mess or bother of loose coffee grounds. A filterbag for espresso coffeemakers pursuant to the present invention includes a first piece of filterpaper having an outer circular diameter. The first piece of filterpaper is formed into a central, substantially cylindrical pocket having an outer circular diameter and a depth. A second substantially planar circular piece of filterpaper, having an outer diameter substantially equal to that of the first piece of filterpaper, is sealed to the first piece of filterpaper at an annular flange around the central substantially cylindrical pocket. A metered quantity of loose ground espresso coffee is sealed within the central substantially cylindrical pocket. In usage, the central substantially cylindrical pocket of the filterbag is placed in a funnel basket of an espresso coffeemaker which is then positioned in a base pot of the espresso coffeemaker, and the annular sealed flange is placed and secured in place in an annular area between the funnel basket in the base pot and a top pot of the espresso coffeemaker.

In different embodiments herein, the filterbag might be designed for different sized espresso coffeemakers designed to brew from one to twelve cups of espresso coffee, and accordingly the dimensions of the filterbag will vary also, and the first piece of filterpaper can have an outer circular diameter in the range of 41.5 to 81.0 mm. The central substantially cylindrical pocket can have an outer circular diameter in the range of 34.0 to 71.0 mm and a depth in the range of 15.5 to 42.0 mm The second substantially planar circular piece of filterpaper can have a diameter in the range of 41.5 to 81.0 mm, and is sealed to the first piece of filterpaper to form an annular sealed flange around the central substantially cylindrical pocket having a width in the range of 3.75 to 5.0 mm.

In more preferred embodiments of a filterbag pursuant to the present invention, the filterbag is designed to fit a fairly standard size espresso coffeemaker designed to brew 270 grams of espresso coffee. In these more preferred embodiments, the first piece of filterpaper can have an outer circular diameter in the range of 65.0 to 66.0 mm. The central substantially cylindrical pocket can have an outer circular diameter in the range of 55.0 to 60.0 mm and a depth in the range of 25.0 to 30.0 mm. The second substantially planar circular piece of filterpaper can have a diameter in the range of 65.0 to 66.0 mm, and is sealed to the first piece of filterpaper to form an annular sealed flange around the central substantially cylindrical pocket having a width in the range of 3.75 to 5.0 mm. The metered quantity of espresso coffee is metered to brew espresso coffee with three cups of water to produce 270 grams of brewed espresso coffee.

In a most preferred universal embodiment which is designed for a standard size espresso coffeemaker designed to brew 270 grams of brewed espresso coffee, the first piece of filterpaper has an outer circular diameter of approximately 65.5 mm. The central substantially cylindrical pocket has an outer circular diameter of approximately 57 mm and a depth of approximately 29 mm. The second substantially planar circular piece of filterpaper has a diameter of approximately 65.5 mm, and is sealed to the first piece of filterpaper to form a substantially 4.25 mm wide annular sealed flange around the central substantially cylindrical pocket. The metered quantity of espresso coffee is metered to brew espresso coffee with three cups of water. Other embodiments with different dimensions and different metered quantities of espresso coffee are also possible within the teachings of the present invention.

The present invention also provides a method of brewing espresso coffee in an espresso coffeemaker which includes a base pot in which a measured amount of water is initially placed. A funnel basket inset, having a filterbag pursuant to the present invention placed therein, is inserted into the base pot. The funnel basket inset has a bottom percolator stem extending downwardly approximately to the bottom of the base pot. A top pot, which includes a liquid spout therein extending upwardly approximately to the top of the top pot, is then screwed onto the base pot. The assembled espresso coffeemaker is then heated until the water in the base pot boils. The boiling water percolates up through the percolator stem, and passes through the espresso filterbag and the ground espresso coffee therein, and then upwardly through the liquid spout, out the top thereof, and into the top pot, in which the brewed espresso coffee accumulates. After brewing and serving the brewed espresso coffee, the top pot is unscrewed from the base pot, and the used filterbag is removed from the funnel basket inset and discarded.

### BRIEF DESCRIPTION OF THE DRAWINGS

The foregoing objects and advantages of the present invention for a filterbag for espresso coffeemakers may be more readily understood by one skilled in the art with reference being had to the following detailed description of several preferred embodiments thereof, taken in conjunction with the accompanying drawings wherein like elements are designated by identical reference numerals throughout the several views, and in which:
Figure 1 illustrates a first step in the fabrication of a filterbag for espresso coffeemakers pursuant to the present invention in which a stamp presses filterpaper into a mold to form a substantially cylindrical pocket therein;
Figure 2 depicts a second step in the fabrication of a filterbag for espresso coffeemakers pursuant to the present invention in which a dosed amount of ground espresso coffee is deposited into the substantially cylindrical pocket formed by the filterpaper in the mold;
Figure 3 illustrates a third step in the fabrication of a filterbag for espresso coffeemakers pursuant to the present invention in which an upper piece of filterpaper is sealed by a mold onto the lower piece of filterpaper in an annular flange formed around the central, substantially cylindrical pocket;
Figure 4 depicts the finished filterbag for espresso coffeemakers produced pursuant to the sequence of steps in Figures 1-3;
Figure 5 illustrates a preferred embodiment of a universal filterbag for espresso coffeemakers and shows the dimensions of a preferred embodiment;
Figure 6 illustrates the finished filterbag of Figure 4 placed in a funnel basket sieve inset of an espresso coffeemaker;
Figure 7 shows an assembled espresso coffeemaker with the filterbag and funnel basket sieve inset placed therein, and illustrates the operation of the espresso coffeemaker; and
Figure 8 is a schematic view of an exemplary embodiment of a rotary mold and packaging machine which can be utilized to produce filterbags for espresso coffeemakers pursuant to the present invention.

### DETAILED DESCRIPTION OF THE DRAWINGS

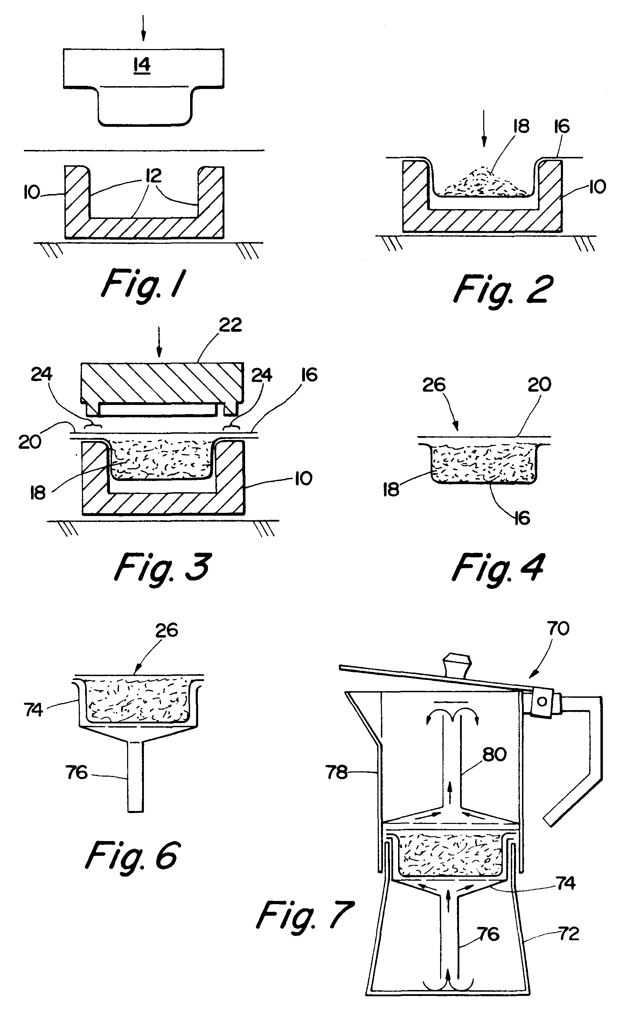

Referring to the drawings in detail, Figure 1 illustrates a schematic arrangement of a first step in the fabrication of a filterbag for espresso coffeemakers pursuant to the present invention, in which a stamp mold presses filterpaper into a mold to form a substantially cylindrical pocket therein. The mold arrangement includes a bottom mold 10 defining a cylindrical mold pocket 12, and a stamp mold 14 for pressing a bottom filterpaper 16 into the mold pocket 12. The bottom sheet of filterpaper 16 is placed, plasticizer side up, above the bottom mold 10. The surface area of the bottom filter sheet 16 is then pressed into (possibly assisted by a vacuum) and caused to conform to the cylindrical mold pocket 12 of the bottom mold 10.

Figure 2 depicts a second step in the fabrication of a filterbag for espresso coffeemakers pursuant to the present invention in which a metered or measured amount of ground espresso coffee 18 is deposited into the substantially cylindrical pocket formed by the filterpaper in the mold. In different embodiments herein the metered or measured amount of espresso ground coffee 18 can include from 6.0 to 60.0 grams of ground espresso coffee to brew from one to twelve cups of espresso coffee. In preferred embodiments designed for a standard size espresso coffeemaker designed to brew 270 grams of brewed espresso coffee, the metered or measured amount of espresso ground coffee 18 includes 20 to 30, preferably 25, grams of ground espresso coffee for a standard filterbag for espresso coffeemakers.

Figure 3 illustrates a third step in the fabrication of a filterbag for espresso coffeemakers pursuant to the present invention in which an upper, generally planar piece of filterpaper 20 is sealed by a heated top mold 22 onto the lower piece of filterpaper in an annular flange 24 formed around the substantially cylindrical pocket. The top sheet of filterpaper 20 is placed, plasticizer side down, over the bottom filter sheet in the bottom mold pocket, extending over the bottom filter sheet in an annular area surrounding the mold pocket. The heated top mold 22 is then pressed down to heat seal the top and bottom filter sheets together in the annular area 24 surrounding the mold pocket. The resultant product is then trimmed, as by die cutting, to form filterbags for espresso coffeemakers.

Figures 4 and 5 depict a finished filterbag 26 for espresso coffeemakers produced pursuant to the sequence of steps in Figures 1-3, with Figure 5 illustrating the dimensions of a preferred embodiment.

In an automated version of the production method of Figure 1, a plurality of molds 10 could be connected in an endless chain configuration, with each mold having the bottom filterpaper placed thereover in a first station, whereat the stamp mold 14, or a vacuum applied to the mold cavity 12, causes the filterpaper to conform to the mold cavity. A metered amount of espresso coffee 18 is then deposited over the bottom filterpaper in the mold cavity in a fill station, and the top filterpaper is then placed thereover. The metered amount of ground espresso coffee can be deposited by a standard metering and depositing machine. A heated sealing head 22 then presses and heat seals together the two sheets of filterpaper in a sealing station. The coffee filterbag is then removed from the mold cavity and trimmed to a selected diameter.

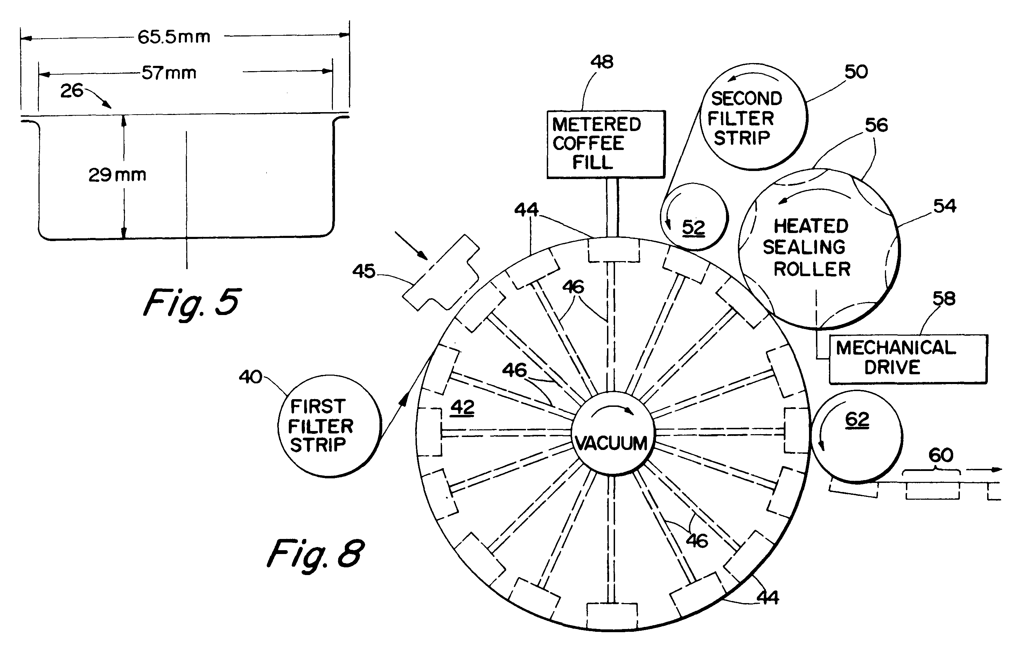

Fig. 8 illustrates a schematic arrangement of a rotary mold and packaging machine, as might be used in a commercial embodiment for producing filterbags for espresso coffeemakers pursuant to the present invention. A first or bottom strip of filterpaper is supplied from a supply roll 40 onto the cylindrical side surface of a rotating cylindrical mold 42. The rotary mold 42 preferably comprises a series of circumferentially spaced cylindrical mold pockets 44, each of which communicates with a central vacuum by a vacuum passageway 46. The applied vacuum causes the first strip of filterpaper to conform to the mold pockets 44. A stamp mold 45, similar to stamp mold 14, presses the filterpaper into each mold pocket 44. At a location near the top of the cylindrical mode 42 when the mold pockets are substantially horizontal and level, a metered amount of ground espresso coffee is deposited therein by a metering and depositing machine 48. A second or top filter strip is supplied by a roll 50 around an idler roller 52 to apply a second filter strip over the first filter strip and the coffee filled pockets therein. The first and second filter strips can be formed from a polyethylene impregnated base filterpaper to provide for heat sealing together by a heated sealing roller 54, which heats and presses the two sheets of filterpaper together in the annular area 24 around the coffee pocket. The heated sealing roller 54 is provided with a series of circumferentially spaced cut-outs 56 therein in correspondence with the circumferentially spaced mold pockets 44 of the cylindrical mold, and accordingly the heated sealing roller 54 is driven in synchronism with the cylindrical mold 42 by a common mechanical drive 58. The strip 60 of sealed spaced filterbags is then withdrawn from the rotating mold 42 over an output idler roller 62. The output strip 60 is then cut and trimmed by a die cutting machine to form individual filterbags for espresso coffeemakers 64. A suitable rotary die packaging machine similar to that of Figure 8 is commercially available from the Cloud Manufacturing Co., which produces and supplies packaging equipment for the food industry, and sells commercially rotary die packaging machines.

The first and second filter strips are preferably filterpaper coated with polypropylene, or alternatively polyethylene, plasticizer sealer to provide for heat sealing thereof. Moreover, the first and second pieces of filterpaper can also be directed to the molds from continuous strip supplies thereof, as from supply rollers, and the process continued as described, forming an output strip of joined coffee filterbags for espresso coffeemakers, which could then be cut and trimmed by a die cutting machine to form the individual filterbags.

Preferably, the first strip of filterpaper should be able to stretch and yield a substantial amount to enable it to conform without tearing to the contour of the mold cavity. A crepe stretch filterpaper can be used to meet those requirements satisfactorily. The second strip of filterpaper is applied substantially flat, and accordingly need not be stretch filterpaper. However, supply stocks would be simplified by choosing the material of the second strip of filterpaper to be the same as the first strip.

Figure 6 illustrates the finished filterbag of Figure 4 placed in a funnel basket sieve inset 74 of an espresso coffeemaker. Figure 7 shows an assembled espresso coffeemaker with the filterbag and funnel basket sieve inset placed therein, and illustrates the operation of the espresso coffeemaker.

Referring to Figure 7, an Italian or espresso coffeemaker 70 is illustrated which includes a base pot 72 in which a measured amount of water is initially placed. A funnel basket or sieve inset 74, having a filterbag pursuant to the present invention placed therein, is then inserted into the base pot 72. The funnel basket inset has a bottom percolator stem 76 extending downwardly therefrom approximately to the bottom of the base pot 72. A top pot 78 of the espresso coffeemaker is then screwed onto the base pot. The top pot 78 includes a liquid spout 80 therein which extends approximately to the top of the top pot.

The assembled espresso coffeemaker is then heated, as on a range, until the water in the base boils. The boiling water then percolates up through the percolator stem 76, and passes through the espresso filterbag and the ground espresso coffee therein, and then passes upwardly through the liquid spout 80, out the top thereof, and into the top pot 78, in which the brewed espresso coffee accumulates. After brewing and serving the brewed espresso coffee, the top pot 78 is unscrewed from the base pot 72. The used filterbag is then removed from the funnel basket inset, and is thrown away or disposed of.

While several embodiments and variations of the present invention for a filterbag for espresso coffeemakers are described in detail herein, it should be apparent that the disclosure and teachings of the present invention will suggest many alternative designs to those skilled in the art.

## Claims

1. A filterbag for espresso coffeemakers having loose ground espresso coffee therein and comprising a first piece of filterpaper having an outer circular diameter, and being formed into a central substantially cylindrical pocket having an outer circular diameter and a depth, a second substantially planar circular piece of filterpaper having an outer diameter substantially equal to that of the first piece of filterpaper which is sealed to said first piece of filterpaper at an annular sealed flange around said central substantially cylindrical pocket, and a metered quantity of loose ground espresso coffee sealed within said central substantially cylindrical pocket, wherein the central substantially cylindrical pocket is placed in a funnel basket of an espresso coffeemaker which is positioned in a base pot of the espresso coffeemaker, and the annular sealed flange is placed in an annular area between the funnel basket in the base pot and a top pot of the espresso coffeemaker.

2. A filterbag for espresso coffeemakers as claimed in claim 1, wherein said first piece of filterpaper has an outer circular diameter in the range of 41.5 to 81.0 mm, said central substantially cylindrical pocket has an outer circular diameter in the range of 34.0 to 71.0 mm and a depth in the range of 15.5 to 42.0 mm, and said second substantially planar circular piece of filterpaper has a diameter in the range of 41.5 to 81.0 mm which is sealed to said first piece of filterpaper to form an annular sealed flange around said central substantially cylindrical pocket having a width in the range of 3.75 to 5.0 mm.

3. A filterbag for espresso coffeemakers as claimed in claim 1, wherein said first piece of filterpaper has an outer circular diameter in the range of 65.0 to 66.0 mm, said central substantially cylindrical pocket has an outer circular diameter in the range of 55.0 to 60.0 mm and a depth in the range of 25.0 to 30.0 mm, and said second substantially planar circular piece of filterpaper has a diameter in the range of 65.0 to 66.0 mm which is sealed to said first piece of filterpaper to form an annular sealed flange around said central substantially cylindrical pocket having a width in the range of 3.75 to 5.0 mm.

4. A filterbag for espresso coffeemakers as claimed in claim 1, wherein said first piece of filterpaper has an outer circular diameter of approximately 65.5 mm, said central substantially cylindrical pocket has an outer circular diameter of approximately 57 mm and a depth of approximately 29 mm, and said second substantially planar circular piece of filterpaper has a diameter of approximately 65.5 mm which is sealed to said first piece of filterpaper to form a substantially 4.25 mm wide annular sealed flange around said central substantially cylindrical pocket.

5. A filterbag for espresso coffeemakers as claimed in claim 4, said metered quantity of espresso coffee being metered to brew espresso coffee with three cups of water.

6. A method of brewing espresso coffee in an espresso coffeemaker which includes a base pot in which a measured amount of three cups of water is initially placed, and a funnel basket inset, having a filterbag as claimed in claim 5 placed therein, is inserted into the base pot, wherein the funnel basket inset has a bottom percolator stem extending downwardly approximately to the bottom of the base pot, and a top pot, which includes a liquid spout therein extending upwardly approximately to the top of the top pot, is then screwed onto the base pot, and the assembled espresso coffeemaker is then heated until the water in the base pot boils, and the boiling water percolates up through the percolator stem, and passes through the espresso filterbag and the ground espresso coffee therein, and then passes upwardly through the liquid spout, out the top thereof, and into the top pot, in which the brewed espresso coffee accumulates, and after brewing and serving the brewed espresso coffee, the top pot is unscrewed from the base pot, and the used filterbag is removed from the funnel basket inset and is discarded.

7. A method of brewing espresso coffee in an espresso coffeemaker which includes a base pot in which a measured amount of water is initially placed, and a funnel basket inset, having a filterbag as claimed in claim 1 placed therein, is inserted into the base pot, wherein the funnel basket inset has a bottom percolator stem extending downwardly approximately to the bottom of the base pot, and a top pot, which includes a liquid spout therein extending upwardly approximately to the top of the top pot, is then screwed onto the base pot, and the assembled espresso coffeemaker is then heated until the water in the base pot boils, and the boiling water percolates up through the percolator stem, and passes through the espresso filterbag and the ground espresso coffee therein, and then passes upwardly through the liquid spout, out the top thereof, and into the top pot, in which the brewed espresso coffee accumulates, and after brewing and serving the brewed espresso coffee, the top pot is unscrewed from the base pot, and the used filterbag is removed from the funnel basket inset and is discarded.
